# EUROPÄISCHE PATENTANMELDUNG

(11) **EP 2 092 820 A1**
(43) Veröffentlichungstag der Anmeldung: **26.08.2009**
(21) Anmeldenummer: 08003182.6
(22) Anmeldetag: 21.02.2008
(51) Int. Cl.: A01G 13/06

(54) **Vorrichtung und Verfahren zum Frostschutz von Weinreben**

(71) Anmelder: Integrated solutions GmbH, 4123 Allschwil (CH)
(72) Erfinder: Kellenberger, Stefan, 4143 Dornach (CH)
(74) Vertreter: Liesegang, Eva

(57) **Zusammenfassung**

Die Erfindung gibt ein Verfahren und eine Vorrichtung zum Frostschutz von Weinreben an, bei dem ein Gas, insbesondere Luft, an mindestens einer Station (26) durch Kompression erwärmt, über ein Verteilungssystem (28, 30, 32, 34) zu den Weinreben geleitet und durch Austrittsöffnungen aus dem Verteilungssystem ausgegeben wird. Das Verteilungssystem kann insbesondere flexible Schläuche (30) mit kapillaren Öffnungen umfassen, die die erwärmte Luft gleichmäßig über nahezu die gesamte Schlauchoberfläche abgeben.

## Beschreibung

Die Erfindung betrifft eine Vorrichtung und ein Verfahren zum Frostschutz von Weinreben.

Der kommerzielle Weinanbau ist längst nicht auf Regionen mediterranen Klimas beschränkt, sondern mittlerweile auch in den gemäßigten Klimazonen weit verbreitet. Kälteeinbrüche, bei denen die fruchttragenden Pflanzenteile geschädigt werden, führen dort jedoch immer wieder zu großen Ernteausfällen.

Deshalb sind verschiedene Methoden zum Frostschutz von Weinreben entwickelt worden. Die deutsche Patentschrift DE 26 28 88 4 A1 schlägt vor, die frostgefährdeten Trageruten mit einer wärmeisolierenden Umkleidung aus Kunststoff zu schützen. Diese Methode ist zwar einfach und wirkungsvoll, die Ummantelung der Rebstöcke eines größeren Rebenfeldes, die in frostgefährdeten Regionen zumindest einmal jährlich durchgeführt werden muss, ist allerdings sehr arbeitsaufwendig. Nach der Frostperiode muss die Ummantelung mit vergleichbarem Aufwand wieder entfernt werden, um das Wachstum der Pflanzen nicht zu beeinträchtigen und die Bearbeitung der Rebstöcke zu ermöglichen.

Seit einigen Jahren werden alternativ in oder an den Rebenfeldern große Windräder aufgestellt, die bei Frostgefahr die Ausbildung einer Inversionsschicht verhindern und wärmere Luft aus höher liegenden Schichten an die Reben führen sollen. Solche Anlagen sind allerdings sowohl in der Anschaffung als auch im Betrieb sehr kostenintensiv und auch deshalb ineffizient, weil sie keine gezielte Energiezufuhr zu den frostgefährdeten Pflanzenteilen ermöglichen. Zudem führen die großen Propeller im Betrieb zu einer unerwünschten Geräuschbelästigung.

Die Aufgabe der vorliegenden Erfindung besteht darin, eine gleichermaßen wirkungsvolle, wartungsarme und energieeffiziente Methode zum Frostschutz von Weinreben anzugeben.

Diese Aufgabe wird erfindungsgemäß durch die Angabe eines Verfahrens und einer Vorrichtung zum Frostschutz von Weinreben mit den Merkmalen der Ansprüche 1 beziehungsweise 17 gelöst. Vorteilhafte Weiterbildungen sind in den abhängigen Ansprüchen angegeben.

Die Erfindung gibt ein Verfahren zum Frostschutz von Weinreben an, bei dem ein Gas, insbesondere Luft, an mindestens einer Station erwärmt, über ein Verteilungssystem zu den Weinreben geleitet und durch Austrittsöffnungen aus dem Verteilungssystem ausgegeben wird, so dass es die Weinreben zumindest teilweise umströmt. Das Verfahren eignet sich sowohl für ebene als auch geneigte Rebenfelder nahezu jeden Zuschnitts und jeder Größe.

Indem Luft durch Kompression erwärmt und unmittelbar nachfolgend unter Druck in das Verteilungssystem und über die Austrittsöffnungen zu den Weinreben geleitet wird, kann auf getrennte Anlagen zur Lufterwärmung und Luftverteilung verzichtet werden. Dadurch sinken sowohl die Anschaffungs- als auch die Wartungskosten. Die Kompression der Luft erfolgt in vorteilhafter Weise mittels eines Verdichters, beispielsweise eines Drehkolbengebläses.

Die Erwärmung und Verteilung durch Kompression, insbesondere mit Hilfe eines Drehkolbengebläses, hat eine Reihe besonderer Vorteile. Die durch Kompression erwärmte Luft lässt sich zielgenau zu den besonders frostempfindlichen Pflanzenteilen leiten und dort gleichmäßig verteilen. Somit wird die Wärme dorthin geleitet, wo sie tatsächlich gebraucht wird, und es geht nur wenig Wärme ungenutzt verloren. Ferner ist der erfindungsgemäße Aufbau äußerst robust, betriebssicher und von langer Lebensdauer. Dies ist insbesondere deshalb von Bedeutung, als die Vorrichtung zum Frostschutz überhaupt nur in Ausnahmefällen zum Einsatz kommen muss, nämlich während vorübergehender Kälteeinbrüche, während sie die allermeiste Zeit nicht benötigt wird und außer Betrieb ist. Wenn die Heizung allerdings benötigt wird, muss sie dafür mit großer Zuverlässigkeit funktionieren, und dies auch dann, wenn sie über lange Zeit außer Betrieb war. Außerdem ist die Wärmeerzeugung über Kompression quasi instantan, so dass plötzlich auftretende Kältespitzen rasch kompensiert werden können.

Die Kompressionseinrichtung ist vorzugsweise geeignet, einen Druck von mindestens 150 kPa, vorzugsweise mindestens 250 kPa zusätzlich zum Atmosphärendruck zu erzeugen.

Ferner ist die Kompressionseinrichtung vorzugsweise geeignet, das Gas durch Kompression um mindestens 5 K, vorzugsweise um mindestens 10 K zu erwärmen. Eine derartige minimale Leistungsfähigkeit der Kompressionseinrichtung reicht aus, um Frostschäden zu verhindern. Die beschriebene minimale Druckerhöhung ist außerdem für die Verteilung des Gases vorteilhaft, weil sie insbesondere die Verwendung von Kapillarschläuchen oder Gewebeschläuchen, die unten beschrieben werden, ermöglicht.

Das mit der Kompressionseinrichtung verbundene Verteilungssystem, das die erwärmte Luft von der Kompressionseinrichtung zu den Weinreben leitet, orientiert sich in Aufbau und Ausgestaltung an der Lage und räumlichen Anordnung der Weinstöcke. Je nach Größe und Zuschnitt des Rebenfeldes kann es zweckmäßig oder notwendig sein, mehrere (eventuell räumlich getrennte) Kompressionseinrichtungen mit einem gemeinsamen Verteilungssystem zu verbinden.

Das Verteilungssystem kann sowohl feste Rohrleitungen als auch flexible Schläuche umfassen. Die Verbindung der Komponenten des Verteilungssystems untereinander sowie mit der oder den Kompressionseinrichtungen erfolgt vorzugsweise durch handelsübliche Ventile. Ein solches Verteilungssystem besteht beispielsweise aus einer oder mehreren mit den Kompressionseinrichtungen verbundenen Hauptleitungen, von denen mehrere Nebenleitungen zu einzelnen Gruppen oder Reihen von Rebstöcken abzweigen. Die Hauptleitungen können dabei vollständig oder überwiegend aus festen Rohrleitungen bestehen, die insbesondere auch unterirdisch verlegt werden können. Dadurch werden im Rebenfeld die Arbeitswege zur Feldbewirtschaftung freigehalten.

Die Nebenleitungen, die die erwärmte Luft von den Hauptleitungen über Austrittsöffnungen an die Weinreben leiten, können überwiegend oder vollständig aus flexiblen gasdurchlässigen Schläuchen bestehen. Die Schläuche können sich der räumlichen Anordnung der Rebstöcke anpassen und zumindest teilweise gegenüber dem Erdboden erhöht verlaufen, beispielsweise entlang eines die Rebstöcke stützenden Drahtgeflechts. Dadurch wird einerseits sichergestellt, dass die erwärmte Luft vornehmlich die besonders frostempfindlichen Pflanzenteile erreicht, und andererseits verhindert, dass das Schlauchsystem das Wachstum oder die Bearbeitung der Pflanzen behindert. Die gasdurchlässigen Schläuche werden dabei vorzugsweise in einem Abstand von mindestens 70 cm, vorzugsweise 85 cm bis 120 cm vom Erdboden geführt.

In vorteilhafter Weise können dabei luftdurchlässige Schläuche nach Art eines Schwitzschlauchs oder Tropfschlauchs zum Einsatz kommen. Durch kapillare Öffnungen geben sie die erwärmte Luft gleichmäßig über nahezu die gesamte Schlauchoberfläche ab. Dadurch kann sichergestellt werden, dass alle gefährdeten Pflanzenteile von einer gleichmäßigen Strömung erwärmter Luft umgeben sind, ohne dass eine sorgfältige und zeitaufwändige Ausrichtung der Austrittsöffnungen nötig wird. Die Kapillaröffnungen benötigen einen gewissen Mindestdruck, um Luft hindurch zu lassen. Ein derartiger Mindestdruck lässt sich jedoch durch die oben beschriebenen Kompressionseinrichtungen, insbesondere durch ein Drehkolbengebläse, ohne weiteres erzeugen. Alternativ können auch Schläuche aus einem Gewebe, beispielsweise einem Kunststoffgewebe verwendet werden. Die Schwitz-, Tropf- oder Gewebeschläuche sind dabei vorzugsweise UV-lichtbeständig.

Das erfindungsgemäße Verfahren sieht zudem vor, dass die Intensität und die Dauer der Kompression und/oder die Verteilung des Gases in Abhängigkeit von der Jahreszeit, der Weinrebensorte, der Umgebungstemperatur, der Luftfeuchtigkeit und/oder der Globalstrahlung gesteuert oder geregelt wird. Mit der Kompressionseinrichtung und/oder dem Verteilungssystem ist deshalb auch eine Steuereinrichtung verbunden, die die Kompression und gegebenenfalls die Verteilung des Gases zu den Rebstöcken steuert oder regelt. Diese Steuereinrichtung ist vorzugsweise mit einem oder mehreren Sensoren zur Bestimmung der Umgebungstemperatur, Luftfeuchte und/oder Globalstrahlung verbunden.

Vorzugsweise ist eine Mehrzahl von Temperatursensoren vorgesehen, die an unterschiedlichen Stellen angeordnet sind. Die für die Steuerung oder Regelung relevante Temperatur wird dann aus der Mehrzahl von erhaltenen Temperaturmesswerten bestimmt, beispielsweise wird der niedrigste gemessene Temperaturwert für die Steuerung bzw. Regelung verwendet. Die Anzahl der Temperatursensoren ist ferner vorzugsweise so groß, dass sich eine ausreichende Redundanz der Messwerte ergibt, anhand derer Fehler in einzelnen Messungen, beispielsweise durch einen defekten Temperatursensor, erkannt und berücksichtigt werden können.

Ferner ist der oder sind die Temperatursensoren vorzugsweise in einem Bereich angeordnet, der von dem erwärmten Gas umströmt wird, wenn die Vorrichtung im Betrieb ist. Dadurch lässt sich die für die frostempfindlichen Teile der Reben relevante Umgebungstemperatur als Istwert ermitteln und diese Temperatur durch einen an sich bekannten Regelkreis über einem bestimmten Sollwert halten, um Frostschäden zu vermeiden. Auf diese Weise kann sichergestellt werden, dass die Reben wirksam vor Frost geschützt sind, ohne im nennenswerten Umfang überschüssige Wärme zu erzeugen, die für die Zwecke des Frostschutzes nicht benötigt wird.

Unterschiedliche Weinrebensorten variieren in ihrer Frostempfindlichkeit. Für nahezu alle Rebensorten ist die Frostempfindlichkeit darüber hinaus auch stark von der Jahreszeit abhängig. Indem die Steuerung oder Regelung der Kompressionseinrichtung auf das Kalenderdatum und die Rebensorte abgestimmt wird, werden einerseits Frostschäden zuverlässig verhindert, andererseits ein unnötiges Beheizen der Weinreben vermieden.

Die Steuerung der Kompression kann beispielsweise in Abhängigkeit von der Differenz der Umgebungstemperatur zu einer von der Jahreszeit und/oder Weinrebensorte abhängigen Schwelltemperatur erfolgen. Die Steuereinrichtung kann darüber hinaus auch eine Eingabeeinheit zur Auswahl einer Rebensorte und/oder Eingabe eines Schwelltemperaturverlaufs umfassen. Die Steuerung oder Regelung der Kompression kann dabei insbesondere über die Steuerung bzw. Regelung der Drehzahl eines Drehkolbengebläses erfolgen.

Das Verfahren und die Vorrichtung der Erfindung sind für den Schutz von Weinreben vor Frostschäden bestimmt. Dies bedeutet, dass die Vorrichtung typischerweise nur an wenigen Tagen im Jahr, an denen tatsächlich Gefahr für Frostschäden besteht, zum Einsatz kommt und in Jahren milden Klimas möglicherweise gar nicht benötigt wird. Wenn die Temperaturen jedoch tatsächlich derart fallen, dass Frostschäden zu befürchten sind, muss die Vorrichtung sicher und zuverlässig funktionieren. Mit anderen Worten kann man sich nicht darauf verlassen, Funktionsfehler im Betrieb festzustellen, da die Vorrichtung ohnehin nur dann im Betrieb ist, wenn sie tatsächlich gebraucht wird, und dann wiederum eine Störung verheerende Folgen hätte. Daher ist die Steuereinrichtung vorzugsweise geeignet, Störungen in der Vorrichtung selbst zu detektieren, und zwar auch dann, wenn sie nicht im Heizbetrieb ist. Ferner umfasst die Vorrichtung vorzugsweise eine Benachrichtigungseinrichtung, beispielsweise ein Mobiltelefon, die geeignet ist, im Falle einer detektierten Störung eine Störungsmeldung zu versenden. Auf diese Weise können Störungen, die während der Ruhezeiten der Vorrichtung auftreten, von der Steuereinrichtung in geeigneten Selbsttests ermittelt werden, und der Betreiber der Vorrichtung kann rechtzeitig auf Störungen in der Vorrichtung hingewiesen werden.

Das erfindungsgemäße Verfahren zum Frostschutz von Weinreben sowie die zugehörigen Vorrichtungen lassen sich am besten anhand der Beschreibung der nachfolgenden Zeichnungen verstehen. Es zeigen in schematischer Darstellung:
- Fig. 1: eine Ausführungsform der erfindungsgemäßen Feldheizung in Aufsicht;
- Fig. 2a: einen Ausschnitt einer Ausführungsform des Verteilungssystems in Seitenansicht;
- Fig. 2b: denselben Ausschnitt im Querschnitt;
- Fig. 3: die jahreszeitlichen Schwellwertkurven für zwei unterschiedlichen Weinrebensorten;
- Fig. 4: ein Flussdiagramm, das die temperaturabhängige Steuerung der Feldheizung veranschaulicht.

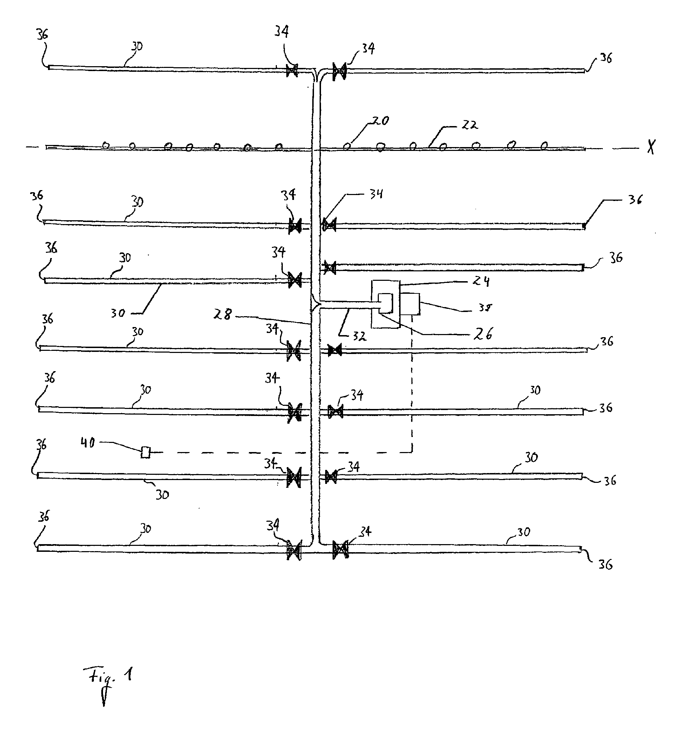

Fig. 1 zeigt schematisch ein Weinrebenfeld mit einer erfindungsgemäßen Feldheizung in Aufsicht. Das gezeigt Rebenfeld besteht aus einer Vielzahl von Rebstöcken, die in zueinander parallelen, äquidistanten Reihen entlang einer Richtung X angeordnet sind. In jeder Reihe sind in regelmäßigen Abständen Holz- oder Metallpfosten 20 angebracht, entlang derer mehrere Metalldrähte 22 zur Befestigung und Stützung der Rebstöcke verspannt sind. In Fig. 1 sind Pfosten 20 und Spanndrähte 22 zur Vereinfachung nur für eine Rebenreihe gezeigt.

Fig. 1 zeigt weiterhin eine Kompressionseinrichtung 24 mit einem Verdichter 26. Bei dem Verdichter 26 kann es sich beispielsweise um ein Drehkolbengebläse handeln. Der Verdichter 26 erwärmt Luft durch Kompression und leitet sie unter Druck aus der Kompressionseinrichtung 24 in ein Verteilungssystem, das in Fig. 1 als ein System miteinander verbundener Hauptleitungen 28 und Nebenleitungen 30 dargestellt ist. Die Hauptleitung 28 verläuft in der gezeigten Ausführungsform senkrecht zu den Reihen der Rebstöcke über die gesamte Länge des Rebenfeldes und ist über ein kurzes Ansatzstück 32 mit dem Verdichter 26 verbunden. Von der Hauptleitung 28 zweigen über Ventile 34 angeschlossene Nebenleitungen 30 ab. In der in Fig. 1 gezeigten Anordnung verläuft in jeder Reihe auf jeder Seite der Hauptleitung 28 eine Nebenleitung 30 entlang der Richtung X, das heißt senkrecht zur Hauptleitung 28, in geringer Entfernung an den Rebstöcken vorbei. In der Reihe, in der die Pfosten 20 und die Spanndrähte 22 exemplarisch eingezeichnet sind, ist die Nebenleitung 30 der Übersichtlichkeit halber nicht eingezeichnet.

Die Hauptleitung 28 kann dabei beispielsweise aus einem Metallrohr oder Kunststoffrohr bestehen und zumindest teilweise unterirdisch verlaufen, während die Nebenleitungen 30 vorzugsweise aus flexiblen Schläuchen bestehen und entlang der Spanndrähte 22 zwischen den Pfosten 20 gespannt werden. Auf diese Weise werden im Rebenfeld die Arbeitswege zur Feldbestellung freigehalten und gleichzeitig sichergestellt, dass das System der Nebenleitungen 30 das Pflanzenwachstum nicht beeinträchtigt.

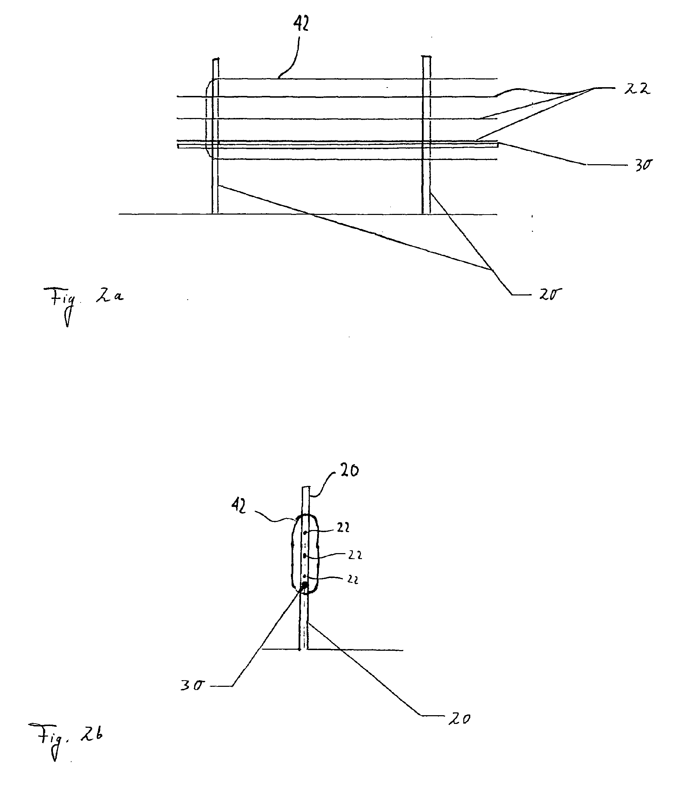

Die Nebenleitungen 30 sind an ihrem der Hauptleitung 28 abgewandten Ende jeweils durch Verschlussklappen 36 luftdicht verschlossen. In der gezeigten Ausführung besteht das System der Nebenleitungen in dem Leitungsabschnitt, der entlang der Rebstöcke verläuft, aus porösen Schläuchen, deren Oberfläche eine Vielzahl von kapillaren Austrittsöffnungen aufweist. In der Bewässerungstechnik sind ähnliche Schläuche unter der Bezeichnung "Schwitzschlauch" oder "Tropfschlauch" bekannt. Derartige Schwitz- oder Tropfschläuche sind im Rahmen der Erfindung vorzugsweise UV-beständig ausgeführt. Die durch den Verdichter 26 der Kompressionseinrichtung 24 erwärmte Luft strömt unter Druck durch das Ansatzstück 32 in die Hauptleitung 28 und von dort über die Nebenleitungen 30 durch die kapillaren Austrittsöffnungen, so dass sie die Rebstöcke zumindest teilweise umströmt. Die Anordnung der Schläuche wird unten anhand von Fig. 2a und Fig. 2b genauer beschrieben.

Zur Steuerung oder Regelung der Kompression und Luftverteilung ist die Kompressionseinrichtung 24 mit einer Steuereinrichtung 38 verbunden, die in Abhängigkeit von der Umgebungstemperatur die Drehzahl des Drehkolbengebläses 26 mittels eines Frequenzumformers steuert oder regelt. Die Steuereinrichtung 38 ist zu diesem Zweck drahtlos mit mindestens einem an geeigneter Stelle des Rebenfeldes positionierten Temperaturfühler 40 verbunden. Vorzugsweise ist der Temperaturfühler 40 in der Nähe von frostempfindlichen Abschnitten der Reben angeordnet und insbesondere so angeordnet, dass er von der durch Kompression erwärmten Luft, die aus den Nebenleitungen 30 austritt, auf ähnlich Weise umströmt wird, wie die frostempfindlichen Abschnitte der Reben. Dann gibt der Messwert des Temperaturfühlers 40 Aufschluss über die tatsächlich an den Reben vorliegende Umgebungstemperatur, so dass sich die Intensität der Kompression und die Verteilung der durch Kompression erwärmten Luft optimal regeln lässt.

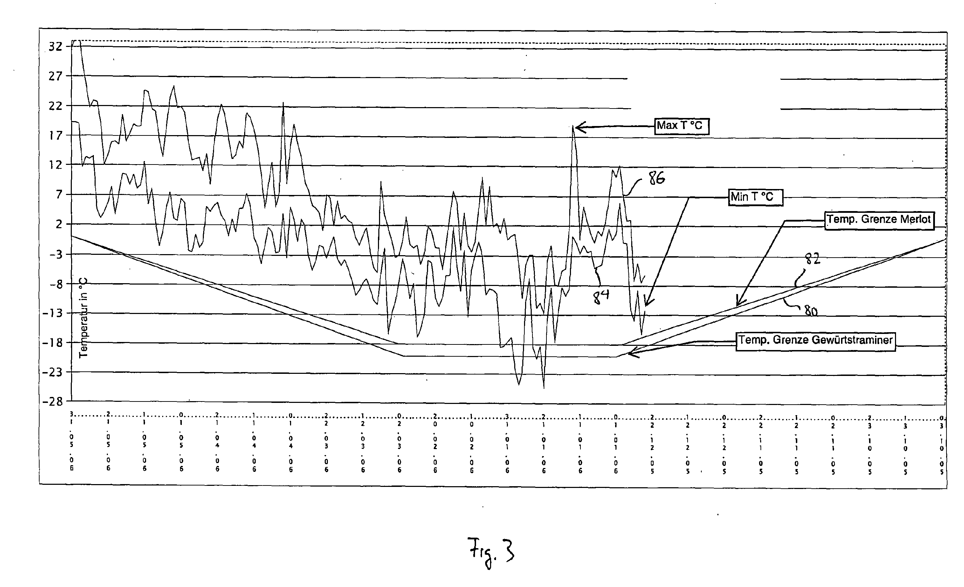

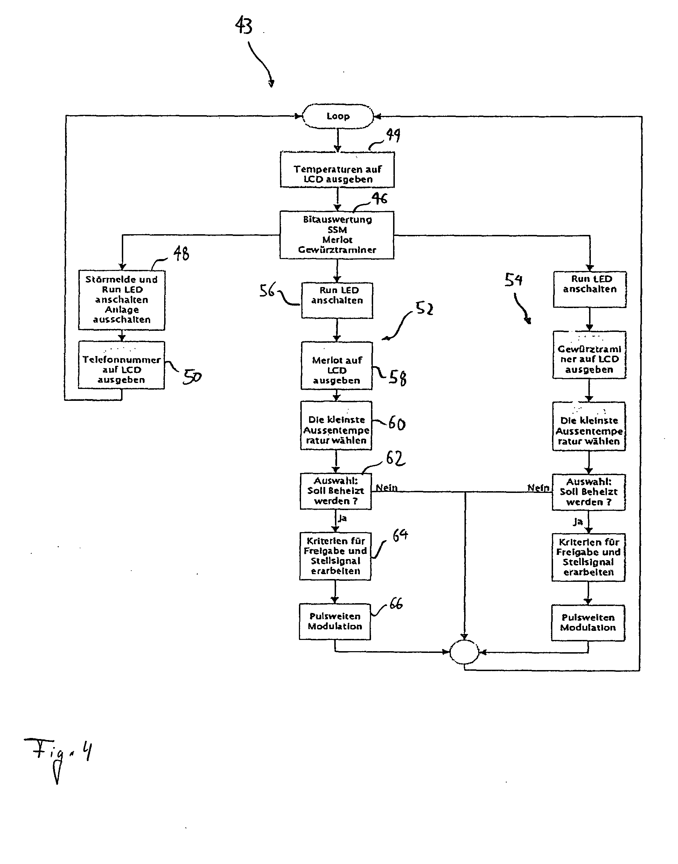

Neben Temperaturfühlern können ergänzend auch Hygrometer zur Messung der Luftfeuchtigkeit und Pyranometer zur Messung der Globalstrahlung vorgesehen sein. Die Wirkungsweise der Steuereinrichtung 38 wird unten anhand von Fig. 3 und Fig. 4 näher erläutert.

Fig. 1 zeigt den Aufbau einer erfindungsgemäßen Feldheizung lediglich exemplarisch. Hinsichtlich der Anordnung des Verteilungssystems besteht eine große Gestaltungsfreiheit. Auch können in Abhängigkeit von Größe und Zuschnitt des Rebenfeldes mehrere Kompressionseinrichtungen 24 mit einem gemeinsamen Verteilungssystem verbunden sein. Die Unterteilung des Verteilungssystems in Hauptleitungen 28 und Nebenleitungen 30 dient ebenfalls lediglich der Illustration. Wie oben erwähnt können mit der Steuereinrichtung 38 mehrere räumlich getrennte Temperaturfühler 40 verbunden sein. Die Ausgestaltung der Feldheizung, insbesondere des Verteilungssystems, wird sich immer auch an den örtlichen Begebenheiten orientieren.

Fig. 2a zeigt einen Ausschnitt des Verteilungssystems der Fig. 1 im Bereich der Rebstöcke in Seitenansicht. An einem zwischen zwei Pfosten 20 gespannten Draht 22 ist ein Kapillarschlauch als Teil der Nebenleitung 30 des Verteilungssystems aufgehängt. Fig. 2b zeigt denselben Ausschnitt im Querschnitt. Der Abstand zweier Pfosten 20 beträgt in der gezeigten Anordnung ca. 270 cm, die Entfernung des Kapillarschlauchs 30 zum Boden ca. 100 cm. Der Abstand der Pfosten kann aber auch geringer sein und beispielsweise lediglich 100 cm betragen. Die dem Kapillarschlauch während des Betriebs der Anlage entströmende Luft steigt aufgrund ihrer im Vergleich zur umgebenden Luft geringeren Dichte durch die Rebstöcke auf. Die Kapillarschläuche 30 sind dabei in einer solchen Höhe angeordnet, dass insbesondere die frostempfindlichen Knospen der Weinreben von warmer Luft umströmt werden. Das Volumen, in dem die frostempfindlichen Knospen der Weinreben angeordnet sind, ist in Fig. 2a und 2b durch die Kontur 42 angedeutet. Dieser Bereich kann durch die komprimierte Luft, die aus dem Kapillarschlauch 30 austritt, effizient erwärmt werden.

Die Frostempfindlichkeit der Rebstöcke hängt zum einem von der Weinrebensorte ab, ist aber darüber hinaus auch stark jahreszeitenabhängig. Fig. 3 zeigt den jahreszeitlichen Verlauf zweier Schwellkurven für die Traubensorten Gewürztraminer 80 beziehungsweise Merlot 82 für einen Ort auf der Nordhalbkugel. Auf der Abszisse in Fig. 3 ist das Kalenderdatum aufgetragen, wobei die Zeit in der Darstellung von Fig. 3 von rechts nach links läuft. Das Minimum der Schwellkurven und damit die geringste Frostempfindlichkeit liegt in den Monaten Januar und Februar vor. Fällt die Umgebungstemperatur unter die Schwelltemperatur, sind Frostschäden an den Rebstöcken wahrscheinlich. Zur Veranschaulichung zeigt Fig. 3 exemplarisch auch Temperaturkurven, die den jahreszeitlichen Verlauf der Tagestiefsttemperaturen 84 und der Tageshöchsttemperaturen 86 wiedergeben. Wie in Fig. 3 zu sehen ist, unterschreitet die Tagestiefsttemperatur 84 nur an wenigen Tagen im Jahr den Schwellwert 80 bzw. 82. Nur an diesen Tagen wird die Feldheizung der Erfindung überhaupt benötigt und zum Einsatz kommen.

Fig. 4 zeigt ein Flussdiagramm, das die Funktion der Steuereinrichtung 38 in vereinfachter Weise veranschaulicht. Fig. 4 zeigt eine Schleife 43 aus Programmschritten, die die Steuereinrichtung 38 kontinuierlich ausführt, wenn sie sich im Bereitschaftsmodus befindet. Im Schritt 44 werden Temperaturen, die von einer Mehrzahl von Temperaturfühlern 40 (siehe Fig. 1) gemessen werden, auf einer LCD-Anzeige angezeigt, die mit der Steuereinrichtung 38 verbunden ist. Im folgenden Schritt 46 findet eine Bitauswertung eines Datenwortes statt, welches sowohl eine "Sammelstörungsmeldung" (SSM) als auch die Auswahl einer Rebensorte, im vorliegenden Fall Merlot oder Gewürztraminer, repräsentiert. Die Sammelstörungsmeldung zeigt an, ob in einer Vielzahl von Selbsttests, die die Steuereinrichtung 38 kontinuierlich durchführt, Störungen detektiert wurden. Dabei kann es sich beispielsweise um Störungen in dem Frequenzumformer oder in einem der verwendeten Leistungsschutzschalter handeln. Falls die Bitauswertung in Schritt 46 ergibt, dass eine Störung vorliegt, schreitet der Prozessablauf zum Schritt 48 voran, in dem eine Störungsmeldung erstellt wird. Die Störungsmeldung kann beispielsweise über eine Benachrichtigungseinrichtung, z.B. ein Mobiltelefon, unmittelbar an eine zuvor bestimmte Person, beispielsweise den Winzer, gesendet werden. Außerdem wird im Schritt 48 eine "Run-LED" eingeschaltet, die anzeigt, dass die Steuerung 38 in Betrieb ist, auch wenn in diesem Fall eine Störung vorliegt. Außerdem wird die Anlage im Schritt 48 aus Sicherheitsgründen ausgeschaltet.

Im nachfolgenden Schritt 50 wird eine Telefonnummer auf einer LCD-Anzeige ausgegeben, an die sich eine Bedienperson für technische Unterstützung wenden kann. Danach kehrt der Prozess an den Anfang zurück.

In der Bitauswertung von Schritt 46 wird ferner festgestellt, welche Rebensorte vorliegt. Im gezeigten Ausführungsbeispiel stehen zwei Rebensorten zur Auswahl, Merlot und Gewürztraminer. Welche Rebensorte vorliegt, wird manuell an einer Eingabevorrichtung für die Steuereinrichtung 38 (in den Figuren nicht gezeigt) eingegeben, beispielsweise durch Betätigen eines Wählschalters. Außerdem kann der Schwelltemperaturverlauf für die betreffende Rebensorte manuell eingegeben werden. In Abhängigkeit von der Rebensorte, die im Schritt 46 ermittelt wurde, verzweigt sich der Prozess in zwei Äste 52 (für den Fall Merlot) und 54 (für den Fall Gewürztraminer). Die Äste 52, 54 sind an sich identisch, außer dass im Prozess die jeweiligen Schwellwertverläufe Anwendung finden. Daher wird im Folgenden nur der Ast 52 im Detail beschrieben.

Im Schritt 56 des Astes 52 wird die "Run-LED" eingeschaltet, die anzeigt, dass die Steuereinrichtung 38 in Betrieb ist. Im nachfolgenden Schritt 58 wird die Rebensorte, im vorliegenden Fall Merlot, auf der LCD-Anzeige ausgegeben.

Im folgenden Schritt 60 wird die kleinste der gemessenen Außentemperaturen ausgewählt. Anhand dieser kleinsten Außentemperatur wird im folgenden Schritt 62 entschieden, ob eine Beheizung notwendig ist. Falls die in Schritt 60 ermittelte kleinste Außentemperatur um weniger als einen vorbestimmten Differenztemperaturwert oberhalb der dem Kalenderdatum und der der Rebensorte (hier Merlot) entsprechenden Schwelltemperatur liegt, wird entschieden, dass die Reben beheizt werden sollen, und der Prozess schreitet zum Schritt 64 voran. Anderenfalls kehrt der Prozess an seinen Anfang zurück.

Im Schritt 64 erstellt die Steuereinrichtung 38 ein Stellsignal, welches die Drehzahl des Drehkolbengebläses 26 vorgibt. Der Wert des Stellsignals hängt davon ab, wie nahe die im Schritt 60 ermittelte kleinste Außentemperatur bereits an die Schwelltemperatur herangekommen ist. Je mehr sich die Außentemperatur der Schwelltemperatur annähert, desto mehr nähert sich das Stellsignal der maximalen Drehzahl an. Das Stellsignal wird im Schritt 66 als ein pulsweitenmoduliertes Signal erzeugt und an einen Frequenzumformer (nicht gezeigt) gesandt, der die Drehzahl des Drehkolbengebläses 26 (siehe Fig. 1) entsprechend steuert. Danach kehrt der Prozess an seinen Anfang zurück.

Wenn die im Schritt 60 ermittelte kleinste Außentemperatur in einem Bereich gemessen wird, der von der durch Kompression erwärmten Luft erreicht wird, stellt der Zweig 52 einen Teil einer Regelschleife dar, in der die für die Weinreben effektiv vorliegende Umgebungstemperatur geregelt werden kann. Dies stellt die bevorzugte Ausführungsform der Erfindung dar.

Alternativ kann die Außentemperatur jedoch auch in einem Bereich gemessen werden, der von der erwärmten Luft nicht erreicht wird, und somit der tatsächlichen Außentemperatur entsprechen. In diesem Fall wird dann die Drehzahl des Drehkolbengebläses 26 nicht geregelt, sondern in Abhängigkeit von der tatsächlichen Außentemperatur gesteuert. Auch durch diese einfache Steuerung lässt sich ein wirksamer Frostschutz erzielen, ohne dass im inakzeptablen Umfang überschüssige Wärme erzeugt wird.

Als Differenztemperaturwert zum Schwellwert, ab dem die Kompression der Luft einsetzt, hat sich 3°C als zweckmäßig erwiesen. Ab einer Temperaturdifferenz von 3°C wird in einer bevorzugten Ausführungsform das Drehkolbengebläse mit 50% der maximalen Leistung betrieben, und diese Leistung wird durch Drehzahlerhöhung erhöht, wenn sich die Temperatur an die Schwellwerttemperatur annähert.

Die beschriebenen Zeichnungen stellen lediglich beispielhaft eine Ausführungsform der Erfindung dar. Der Schutzumfang ergibt sich allein aus den folgenden Ansprüchen.

Bezugszeichenliste:
- 20: Pfosten
- 22: Spanndrähte
- 24: Kompressionseinrichtung
- 26: Verdichter
- 28: Hauptleitung
- 30: Nebenleitung
- 32: Ansatzstück
- 34: Ventil
- 36: Verschlussklappe
- 38: Steuereinrichtung
- 40: Temperaturfühler
- 42: von der komprimierten Luft erwärmtes Volumen
- 43: Flussdiagramm des Betriebes der Steuereinrichtung 38
- 44-46: Prozessschritte des Flussdiagramms 43
- 80: Schwellkurve am Beispiel Gewürztraminer
- 82: Schwellkurve am Beispiel Merlot
- 84: Tagestiefstemperaturverlauf
- 86: Tageshöchsttemperaturverlauf
- 88: Eingabeeinheit

## Patentansprüche

1. Verfahren zum Frostschutz von Weinreben, bei dem ein Gas, insbesondere Luft, durch Kompression an einer oder mehreren Stationen (24) erwärmt, über ein Verteilungssystem (28, 30, 32, 34) zu den Weinreben geleitet und durch Austrittsöffnungen aus dem Verteilungssystem ausgegeben wird, so dass es die Weinreben zumindest teilweise umströmt.

2. Verfahren nach Anspruch 1, wobei das Gas mittels eines Verdichters (26) komprimiert wird.

3. Verfahren nach Anspruch 2, wobei der Verdichter (26) ein Drehkolbengebläse umfasst.

4. Verfahren nach einem der vorhergehenden Ansprüche, bei dem der Druck des Gases durch die Kompression um mindestens 150 kPa, vorzugsweise mindestens 250 kPa erhöht wird.

5. Verfahren nach einem der vorhergehenden Ansprüche, bei dem das Gas durch die Kompression um mindestens 5 K, vorzugsweise mindestens 10 K erwärmt wird.

6. Verfahren nach einem der vorangehenden Ansprüche, wobei das Verteilungssystem ein Rohrsystem (28) und/oder ein System flexibler Schläuche (30) umfasst.

7. Verfahren nach Anspruch 6, wobei das System flexibler Schläuche (30) gasdurchlässige Schläuche umfasst, die das komprimierte Gas über ihre nahezu gesamte Oberfläche abgeben.

8. Verfahren nach Anspruch 7, bei dem die gasdurchlässigen Schläuche (30) entlang der Reihen von Rebstöcken in einem Abstand von mindestens 70 cm, vorzugsweise 85 cm bis 120 cm vom Erdboden geführt werden.

9. Verfahren nach einem der vorangehenden Ansprüche, wobei die Intensität und/oder Dauer der Kompression und/oder die Verteilung des Gases in Abhängigkeit von einem oder mehreren der folgenden Parameter gesteuert oder geregelt wird:
Umgebungstemperatur, Jahreszeit, Weinrebensorte, Luftfeuchtigkeit und
Globalstrahlung.

10. Verfahren nach Anspruch 9, wobei die Steuerung oder Regelung in Abhängigkeit von der Differenz der Umgebungstemperatur zu einer Schwelltemperatur erfolgt.

11. Verfahren nach Anspruch 10, bei dem die Schwelltemperatur von der Jahreszeit und/oder der Weinrebensorte abhängig ist.

12. Verfahren nach einem der Ansprüche 9 bis 11, bei dem die Umgebungstemperatur in einem Bereich (42) gemessen wird, der von dem erwärmten Gas umströmt wird.

13. Verfahren nach einem der Ansprüche 9 bis 12, bei dem die Umgebungstemperatur an mehr als einer Stelle gemessen wird und die für die Steuerung oder Regelung relevante Temperatur aus der Mehrzahl von Temperaturmesswerten bestimmt wird.

14. Verfahren nach einem der vorhergehenden Ansprüche, bei dem die im Verfahren eingesetzte Vorrichtung auf Störungen überprüft wird und im Falle einer Störung eine Störungsmeldung über eine Benachrichtigungseinrichtung, insbesondere eine Mobiltelefoneinrichtung, versendet wird.

15. Verfahren nach einem der vorhergehenden Ansprüche, bei dem die im Verfahren eingesetzte Vorrichtung auf Störungen überprüft wird und im Falle einer Störung eine Störungsmeldung auf einer Anzeigeeinrichtung, insbesondere einer LCD-Anzeige angezeigt wird.

16. Verfahren nach einem der Ansprüche 9 bis 15 und Anspruch 3, wobei die Drehzahl des Drehkolbengebläses (26) gesteuert oder geregelt wird.

17. Vorrichtung zum Frostschutz von Weinreben mit:
mindestens einer Kompressionseinrichtung (24), in der ein Gas, insbesondere Luft, durch Kompression erwärmt wird;
einem Verteilungssystem (28, 30, 32, 34), das mit der Kompressionseinrichtung (24) verbunden ist und das komprimierte Gas von der Kompressionseinrichtung (24) zu den Weinreben leitet;
einer Steuereinrichtung (38), die mit der Kompressionseinrichtung (24) und/oder dem Verteilungssystem (28, 30, 32, 34) verbunden ist und die Kompression und/oder Verteilung des Gases steuert oder regelt.

18. Vorrichtung nach Anspruch 17, wobei die Kompressionseinrichtung (24) einen Verdichter (26) umfasst.

19. Vorrichtung nach Anspruch 18, wobei der Verdichter (26) ein Drehkolbengebläse umfasst.

20. Vorrichtung nach einem der Ansprüche 17 bis 19, bei der die Kompressionseinrichtung (24) geeignet ist, einen Druck von mindestens 150 kPa, vorzugsweise mindestens 250 kPa zu erzeugen.

21. Vorrichtung nach einem der Ansprüche 17 bis 20, bei der die Kompressionseinrichtung (24) geeignet ist, das Gas durch Kompression um mindestens 5 K, vorzugsweise um mindestens 10 K zu erwärmen.

22. Vorrichtung nach einem der Ansprüche 17 bis 21, wobei das Verteilungssystem ein Rohrsystem (28) und/oder ein System flexibler Schläuche (30) umfasst.

23. Vorrichtung nach Anspruch 22, wobei Rohrleitungen des Rohrsystems (28) zumindest teilweise unterirdisch und die Schläuche (30) zumindest teilweise gegenüber dem Erdboden erhöht verlaufen.

24. Vorrichtung nach Anspruch 22 oder 23, wobei das System flexibler Schläuche (30) gasdurchlässige Schläuche umfasst, die das komprimierte Gas über ihre nahezu gesamte Oberfläche abgeben.

25. Vorrichtung nach Anspruch 24, bei der die gasdurchlässigen Schläuche (30) entlang der Reihen von Rebstöcken in einem Abstand von mindestens 70 cm, vorzugsweise 85 cm bis 120 cm vom Erdboden geführt werden.

26. Vorrichtung nach einem der Ansprüche 17 bis 25, wobei die Steuereinrichtung (38) mit einem oder mehreren Sensoren (40) zum Bestimmen eines oder mehrerer der folgenden Parameter verbunden ist: Umgebungstemperatur, Luftfeuchte und Globalstrahlung.

27. Vorrichtung nach Anspruch 26, bei der der eine Sensor (40) oder die mehreren Sensoren in einem Bereich (42) angeordnet ist bzw. sind, der von dem erwärmten Gas umströmt wird.

28. Vorrichtung nach einem der Ansprüche 17 bis 27, wobei die Steuereinrichtung (38) geeignet ist einen Frequenzumformer zur Steuerung der Drehzahl des Drehkolbengebläses (26) anzusteuern.

29. Vorrichtung nach einem der Ansprüche 17 bis 28, wobei die Steuereinrichtung (38) eine Eingabeeinheit zur Auswahl einer Rebensorte und/oder zur Eingabe eines Schwelltemperaturverlaufs umfasst.

30. Vorrichtung nach einem der Ansprüche 17 bis 29, wobei die Steuereinrichtung (38) geeignet ist, Störungen in der Vorrichtung zu detektieren, und die eine Benachrichtigungseinrichtung, insbesondere eine Mobiltelefoneinrichtung umfasst, die geeignet ist, im Falle einer detektierten Störung eine Störungsmeldung zu versenden.
